# FASCICULE DE BREVET EUROPEEN

(11) **EP 1 601 247 B1**
(45) Date de publication et mention de la délivrance du brevet: **18.02.2009**
(21) Numéro de dépôt: 04718703.4
(22) Date de dépôt: 09.03.2004
(51) Int. Cl.: A01K 85/02

(54) **APPAT**
KÖDER
LURE

(30) Priorité: 12.03.2003 CH 390032003
(43) Date de publication de la demande: 07.12.2005
(73) Titulaire: Mussot, Patrick, 2855 Glovelier (CH)
(72) Inventeur: Mussot, Patrick, 2855 Glovelier (CH)
(74) Mandataire: Gresset, Jean
(86) Numéro de dépôt international: PCT/IB2004/000804
(87) Numéro de publication internationale: WO 2004/080168

(56) Documents cités:
- US-A- 1 486 028
- US-A- 1 994 878
- US-A- 3 266 185
- US-A- 3 411 233
- US-A- 4 176 489
- US-A- 4 442 622
- US-A- 4 765 084
- US-A- 4 782 618

## Description

La présente invention se rapporte aux appâts, du type utilisé par les pêcheurs pour la pêche aux poissons carnivores, tels que les truites ou les brochets, et particulièrement du type comportant un leurre et un hameçon logé et escamoté dans le leurre.

Des appâts de ce type sont décrits dans les documents US 3 266 185, US 1994 878 et US 1486 028 par exemple. Ils comportent:
- un corps, muni d'un logement, servant de leurre et définissant un axe longitudinal,
- un organe de liaison engagé dans le corps par l'une de ses extrémités, intérieure, destiné à être fixé à une ligne par l'autre extrémité, extérieure, le point d'engagement de l'organe de liaison dans le corps définissant la partie avant de l'appât,
- un hameçon disposé dans le logement, et
- des moyens de fixation de l'organe de liaison et du hameçon dans le corps.

Dans ces appâts, les moyens de fixation comprennent un organe élastique fixé au moins médiatement audit corps par une extrémité et au hameçon et à l'organe de liaison par l'autre extrémité, et un organe de guidage du hameçon, le tout agencé de manière à ce qu'une traction sur l'organe de liaison fait sortir du logement le hameçon alors que l'organe élastique ramène le hameçon dans le logement lorsque la traction est supprimée.

De tels appâts permettent d'éviter que le hameçon s'accroche à une algue ou une racine par exemple. Ils ont toutefois pour inconvénient que les conditions de ferrage du poisson ne sont pas optimales, du fait que le hameçon sort progressivement de son logement, proportionnellement à la traction exercée sur la ligne. Un but de la présente invention est de pallier cet inconvénient. A cet effet, l'appât selon l'invention est caractérisé en ce que les moyens de fixation comprennent, en outre, des premier et deuxième bras et une charnière reliant lesdits bras de manière articulée autour d'un axe perpendiculaire à l'axe longitudinal, l'un des bras étant fixé au corps selon une orientation longitudinale, et en ce que l'organe élastique comprend un ressort agissant sur les bras pour les maintenir, au repos, au voisinage l'un de l'autre par leur extrémité disposée vers l'arrière dudit corps).

L'utilisation d'un organe élastique coopérant avec l'organe de liaison est bien connu, par exemple par le document US 4,176 489. L'appât qui y est décrit est agencé de manière à ce que le hameçon soit libéré et sorte de son logement lorsqu'une traction sur l'organe de liaison dépasse une valeur limite. Cette solution pose problème lorsque le poisson relâche l'appât. Le hameçon reste à l'extérieur du corps de l'appât et peut alors s'accrocher. Au contraire, dans le dispositif selon l'invention, le hameçon s'escamote à nouveau dans son logement, même lorsque le poisson relâche l'appât.

De manière avantageuse, les moyens de fixation comprennent des premier et deuxième bras disposés selon une orientation longitudinale, et les moyens de guidage une charnière reliant les deux bras de manière articulée autour d'un axe perpendiculaire à l'axe longitudinal, l'un des bras étant fixé au corps. L'organe élastique comprend un ressort agissant sur les bras pour les maintenir, au repos, au voisinage l'un avec l'autre par leur extrémité disposée vers l'arrière du corps.

En outre, l'organe de liaison est fixé au bras mobile, à l'arrière de la charnière. Une telle configuration a pour avantage qu'une traction sur l'organe de liaison n'a d'effet qu'à partir d'une valeur limite. Dès que cette valeur est dépassée, le hameçon sort totalement de son logement, garantissant des conditions optimales de ferrage.

Pour garantir de bonnes conditions de travail, le ressort reliant élastiquement les deux bras est avantageusement de type à boudin, enroulé autour d'un axe sensiblement confondu avec l'axe de la charnière. Dans le cas où la charnière comprend une tige cylindrique définissant son axe de pivotement, le ressort est avantageusement engagé sur cette tige.

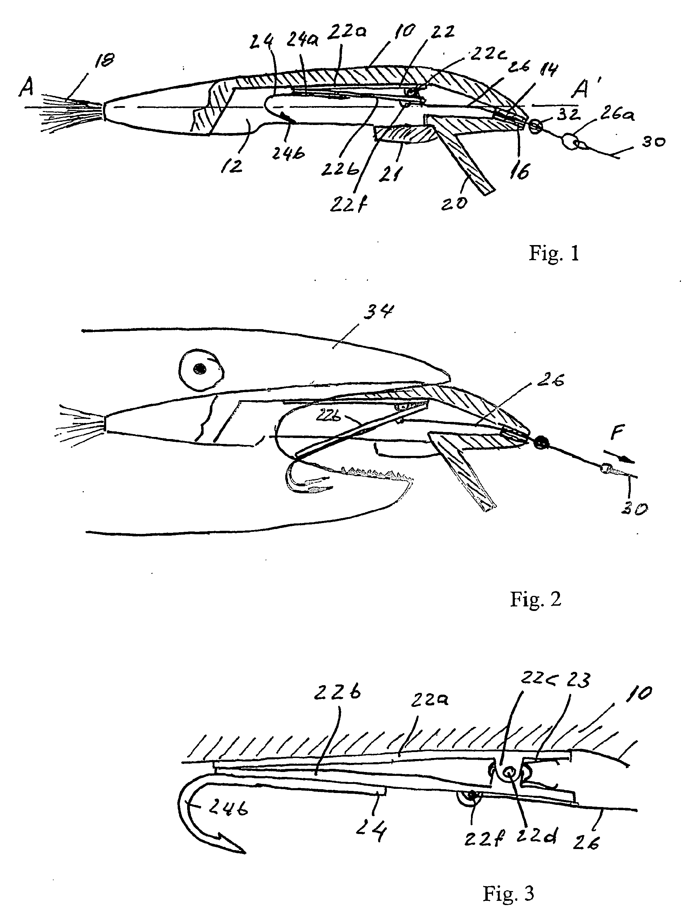

D'autres avantages et caractéristiques de l'invention ressortiront de la description qui va suivre, faite en regard du dessin annexé, dans lequel :
■ les figures 1 et 2 représentent un appât selon l'invention, dans laquelle le hameçon est respectivement en position escamotée et active, et
■ la figure 3 est une vue agrandie de l'appât représenté aux figures 1 et 2.

L'appât représenté au dessin comporte un corps 10 de forme oblongue présentant un axe longitudinal AA', représentant un poisson. Il est réalisé en bois ou en matière plastique et comporte un logement 12 largement ouvert vers le dessous du corps. Le logement 12 est relié à l'avant du corps 10 par un canal 14 dans lequel est logé un tube 16 en laiton.

De manière classique, le corps est complété par une queue 18, réalisée par exemple par un pompon de couleur collé à l'arrière du corps 10, et par une palette de guidage 20 disposée dans la partie inférieure du corps, à l'avant du logement 12. A l'arrière de la palette 20 est disposé un lest 21 garantissant l'engagement de l'appât dans l'eau.

Une pincette 22, représentée de manière agrandie sur la figure 3, est formée de deux bras 22a et 22b reliés entre eux par une charnière 22c et d'un ressort à boudin 23 engagé sur une tige cylindrique 22d définissant l'axe de pivotement de la pincette 22. Elle est fixée par collage de l'un 22a de ses bras contre la paroi supérieure du logement 12, la partie la plus longue des bras 22a et 22b étant tournée vers l'arrière. Le ressort 23 est en appui par l'une de ses extrémités contre le bras 22a fixé au corps 10 et par l'autre extrémité contre le bras 22b. Il est ainsi agencé de manière à ce que les extrémités arrières des deux bras 22a et 22b soient en contact l'une avec l'autre. La colle utilisée peut être du type epoxy à deux composants, telle que celle commercialisée sous la marque Araldyte ®.

La pincette 22 porte un hameçon 24 muni d'un corps 24a fixé par sertissage au bras 22b et de deux branches 24b terminées par des pointes, tournées vers l'extérieur du logement 12, mais sans en dépasser lorsque l'appât n'est pas sollicité. Un organe de liaison 26, avantageusement un fil d'acier inoxydable, est fixé au bras 22b en un point 22f se trouvant légèrement à l'arrière de la charnière 22c, par exemple par sertissage.

L'organe de liaison 26 comporte, à son extrémité extérieure, une boucle 26a destinée à la fixation d'une ligne 30 assurant la traîne de l'appât. Une perle de laiton 32 peut avantageusement être disposée à l'entrée du tube 16.

Lorsqu'un poisson 34 saisit l'appât, comme indiqué sur la figure 2, le pêcheur sent une résistance et exerce une brusque traction sur la ligne 30, représentée par la flèche F, laquelle agit sur l'organe de liaison 26 et sur le bras 22b par le point d'attache 22f. Tant que la force est inférieure à une valeur limite, fonction de l'armage du ressort 22c et du bras de levier que forme le point de fixation de l'organe de liaison 26 sur le bras 22b, ce dernier et le hameçon 24 qu'il porte restent fixe.

Lorsque la valeur limite est atteinte, la force compense l'effet du ressort 23 qui se déforme alors, la pincette 22 s'ouvrant. Comme cette dernière est disposée longitudinalement dans le logement, le bras de levier définit par la distance entre l'axe de la charnière et le point d'attache 23f, tend à augmenter avec l'ouverture des bras 22a et 22b, de telle sorte que, bien que le couple exercé par le ressort augmente, la force à appliquer pour écarter les bras 22a et 22b reste pratiquement constante, voire diminue. Il en résulte que les deux branches 24b du hameçon sortent brusquement du logement 12 et s'engagent dans la bouche du poisson 34, garantissant des conditions optimales de ferrage.

Si, pour une raison ou une autre, le poisson arrive à relâcher l'appât, le ressort 22c ramène automatiquement les bras 24b dans le logement 12, de telle sorte que, même après un ferrage raté, il n'y a aucun risque d'accrochage.

L'expérience a montré que pour pêcher des poissons d'eau douce, tels que le brochet ou la truite, la force à appliquer pour faire sortir le hameçon doit avantageusement être comprise entre 1 et 2 N.

Ainsi, grâce au fait que l'appât selon l'invention est agencé de manière à ce qu'une traction sur son organe de liaison fait sortir l'hameçon du corps du leurre, alors que, lorsque la traction est supprimée, un organe élastique ramène le hameçon à l'intérieur du corps, le risque d'accrochage de l'hameçon est pratiquement supprimé, par des moyens extrêmement simples et peu coûteux.

## Revendications

1. Appât comportant:
• un corps (10), muni d'un logement (12), servant de leurre et définissant un axe longitudinal (AA'),
• un organe de liaison (26) engagé dans le corps (10) par l'une de ses extrémités, intérieure, destiné à être fixé à une ligne (30) par l'autre extrémité, extérieure, le point d'engagement de l'organe de liaison dans le corps (10) définissant la partie avant de l'appât,
• un hameçon (24) disposé dans le logement (12), et
• des moyens de fixation (22) de l'organe de liaison (26) et du hameçon (24) dans le corps (10),
dans lequel les moyens de fixation (22) comprennent un organe élastique (23) fixé au moins médiatement audit corps (10) par une extrémité et au hameçon (24) et à l'organe de liaison (26) par l'autre extrémité, et un organe de guidage (22c) du hameçon (24), le tout agencé de manière à ce qu'une traction sur l'organe de liaison (26) fait sortir du logement (12) le hameçon (24) alors que l'organe élastique (23) ramène le hameçon (24) dans le logement (12) lorsque 20 la traction est supprimée, **caractérisé en ce que** les moyens de fixation (22) comprennent, en outre, des premier (22a) et deuxième (22b) bras et une charnière (22c) reliant lesdits bras (22a, 22b) de manière articulée autour d'un axe perpendiculaire à l'axe longitudinal (AA'), l'un des bras (22a) étant fixé au corps (10) selon une orientation longitudinale, et **en ce que** l'organe élastique comprend un ressort (22d) agissant sur les bras (22a, 22b) pour les maintenir, au repos, au voisinage l'un de l'autre par leur extrémité disposée vers l'arrière dudit corps (10).

2. Appât selon la revendication 1, **caractérisé en ce que** ledit organe de liaison (26) est fixé audit bras (22b) à l'arrière de la charnière (22c).

3. Appât selon la revendication 2, **caractérisé en ce que** ledit ressort (23) est de type à boudin enroulé autour d'un axe sensiblement confondu avec l'axe de l'adite charnière (22c).

4. Appât selon la revendication 2, **caractérisé en ce que** ladite charnière (22c) comprend une tige cylindrique (22f) définissant son axe d'articulation, ledit ressort (23) étant engagé sur ladite tige (22f).

## Claims

1. Lure comprising:
■ a body (10), provided with a housing (12), acting as artificial bait and defining a longitudinal axis (AA'),
■ a link member (26) engaged in the body (10) via one, inner end thereof, to be fixed to a line (30) by the other, outer end, the point of engagement of the link member in the body (10) defining the front part of the lure,
■ a hook (24) arranged in the housing (12), and
■ means (22) for securing the link member (26) and the hook (24) in the body (10),
wherein the securing means (22) comprise a resilient member (23), secured at least mediately to said body (10) by one end, and to the hook (24) and to the link member (26) by the other end, and a member (22c) for guiding the hook (24), the entire assembly being arranged such that a pull on the link member (26) causes the hook (24) to leave the housing (12), whereas the resilient member (23) returns the hook (24) inside the housing (12) when the pulling ceases, **characterized in that** the securing means (22) further include first (22a) and second (22b) arms and a hinge (22c) hinging said arms (22a, 22b) to each other around an axis perpendicular to the longitudinal axis (AA'), one (22a) of the arms being secured to the body (10) along a longitudinal orientation, and **in that** the resilient member includes a spring (22d) that acts on the arms (22a, 22b) to hold said arms, in the rest position, in proximity to each other via the end thereof that is arranged towards the back of said body (10).

2. Lure according to claim 1, **characterized in that** said link member (26) is secured to said arm (22b) behind the hinge (22c).

3. Lure according to claim 2, **characterized in that** said spring (23) is of the helical type, wound around an axis that substantially merges with the axis of said hinge (22c).

4. Lure according to claim 2, **characterized in that** said hinge (22c) includes a cylindrical pin (22f) that defines its hinging axis, said spring (23) being engaged on said pin (22f).

## Patentansprüche

1. Köder mit
• einem mit einer Aufnahme (12) versehenen Körper (10), der als Köder dient und eine Längsachse (AA') definiert,
• einer Verbindungseinrichtung (26), die mit einem ihrer Enden, dem inneren, in den Körper (10) eingreift und die dazu bestimmt ist, mit dem anderen Ende, dem äußeren, an einer Leine (30) befestigt zu werden, wobei die Eingriffsstelle der Verbindungseinrichtung in den Körper (10) den vorderen Teil des Köders bildet,
• einem in der Aufnahme (12) angeordneten Angelhaken (24) und
• Befestigungseinrichtungen (22) für die Verbindungseinrichtung (26) und den Angelhaken (24) in dem Körper (10),
bei welchem die Befestigungseinrichtungen (22) eine elastische Einrichtung (23), die wenigstens mittelbar mit einem Ende an dem Körper (10) und mit dem anderen Ende am Angelhaken (24) und an der Verbindungseinrichtung (26) befestigt ist, und eine Führungseinrichtung (22c) für den Angelhaken (24) aufweisen, wobei das Ganze so ausgelegt ist, dass ein Zug an der Verbindungseinrichtung (26) den Angelhaken (24) aus der Aufnahme (12) heraustreten lässt, während die elastische Einrichtung (23) den Angelhaken (24) in die Aufnahme (12) zurückführt, wenn der Zug aufgehoben wird, **dadurch gekennzeichnet, dass** die Befestigungseinrichtungen (22) weiterhin einen ersten Arm (22a) und einen zweiten Arm (22b) und ein Scharnier (22c) umfassen, das die Arme (22a, 22b) gelenkig um eine zur Längsachse (AA') senkrechte Achse verbindet, wobei einer der Arme (22a) am Körper (10) in einer Längsausrichtung festgelegt ist, und dass die elastische Einrichtung eine Feder (22d) aufweist, die auf die Arme (22a, 22b) wirkt, um sie in der Ruhestellung mit ihrem zur Hinterseite des Körpers (10) zeigenden Ende zueinander benachbart zu halten.

2. Köder nach Anspruch 1, **dadurch gekennzeichnet, dass** die Verbindungseinrichtung (26) an dem Arm (22b) hinter dem Scharnier (22c) festgelegt ist.

3. Köder nach Anspruch 2, **dadurch gekennzeichnet, dass** die Feder (23) eine Schraubenfeder ist, die um eine Achse gewickelt ist, die im Wesentlichen mit der Achse des Scharniers (22c) übereinstimmt.

4. Köder nach Anspruch 2, **dadurch gekennzeichnet, dass** das Scharnier (22c) einen zylindrischen Stift (22f) aufweist, der seine Gelenkachse bildet, wobei die Feder (23) in den Stift (22f) eingreift.
